# EUROPEAN PATENT APPLICATION

(11) **EP 4 769 730 A1**
(43) Date of publication of application: **01.07.2026**
(21) Application number: 24933780.9
(22) Date of filing: 30.10.2024
(51) Int. Cl.: H01M 50/249, H01M 50/244, H01M 50/204, H01M 10/613

(54) **BATTERY DEVICE AND ELECTRICAL DEVICE**

(30) Priority: 01.04.2024 CN 202420647264 U
(71) Applicant: Contemporary Amperex Technology Co., Limited, Ningde, Fujian 352100 (CN)
(72) Inventor: WEI, Jie, Ningde, Fujian 352100 (CN); MIAO, Huimin, Ningde, Fujian 352100 (CN); PAN, Xin, Ningde, Fujian 352100 (CN); KE, Qingpeng, Ningde, Fujian 352100 (CN)
(74) Representative: Gong, Jinping
(86) International application number: PCT/CN2024/128582
(87) International publication number: WO 2025/208855

(57) **Abstract**

A battery apparatus (1100) includes a box body (10), a battery cell (20), and a guard plate (100), where the battery cell (20) is arranged in the box body (10). In a direction of gravity, the guard plate (100) is arranged at the bottom of the battery cell (20), and the guard plate (100) includes a first fiber resin layer (110), an intermediate layer (120), and a second fiber resin layer (130) stacked in sequence in a first direction, the intermediate layer (120) includes a resin frame portion (121) and an anti-puncture plate portion (122), the anti-puncture plate portion (122) is located in the resin frame portion (121), and the resin frame portion (121) is connected between the first fiber resin layer (110) and the second fiber resin layer (130). An electrical apparatus using the above battery apparatus (1100).

## Description

### CROSS-REFERENCE TO RELATED APPLICATIONS

The present application claims priority to Chinese patent application No. 202420647264.5 filed on April 1, 2024 and entitled "GUARD PLATE, BOX BODY, BATTERY, AND ELECTRICAL APPARATUS," the entire content of which is incorporated herein by reference.

### TECHNICAL FIELD

The present application relates to the field of battery technologies, and in particular, to a battery apparatus and an electrical apparatus.

### BACKGROUND

With energy saving and emission reduction being the key to the sustainable development of the automobile industry, electric vehicles have become an important part of the sustainable development of automotive industry due to their advantages of energy saving and environmental protection. For electric vehicles, the battery technology is an important factor related to development thereof.

Therefore, how to improve the safety of a battery apparatus is an urgent problem to be solved in the battery technologies.

### SUMMARY OF THE INVENTION

In view of the above problem, the present application provides a battery apparatus and an electrical apparatus, which can improve the reliability of the battery apparatus.

In a first aspect, the present application provides a battery apparatus, and the battery apparatus includes a box body, a battery cell, and a guard plate, where the battery cell is arranged in the box body. In a direction of gravity, the guard plate is arranged at the bottom of the battery cell, and the guard plate includes a first fiber resin layer, an intermediate layer, and a second fiber resin layer stacked in sequence in a first direction, the intermediate layer includes a resin frame portion and an anti-puncture plate portion, the anti-puncture plate portion is located in the resin frame portion, and the resin frame portion is connected between the first fiber resin layer and the second fiber resin layer.

In a technical solution of embodiments of the present application, the intermediate layer includes the anti-puncture plate portion and the anti-puncture plate portion is located between the first fiber resin layer and the second fiber resin layer, and therefore, the risk of corrosion of the anti-puncture plate portion can be reduced. When the guard plate is subjected to an external force, the anti-puncture plate portion can improve an ability of the guard plate to resist the external force, thereby reducing a risk of excessive deformation of the guard plate. At the same time, the resin frame portion can further improve the strength and rigidity of the guard plate, thereby improving an ability of the guard plate to resist an external impact, which is also conducive to improving the reliability of the battery apparatus. In an embodiment where the guard plate is connected to the box body via the resin frame portion, arrangement of the resin frame portion may further improve connection stability between the guard plate and the box body.

In one or more embodiments of the first aspect, the anti-puncture plate portion includes a plurality of sub-plate portions arranged at intervals, the resin frame portion is provided with a partition bar, and the partition bar is arranged between two adjacent sub-plate portions.

In the above solution, the plurality of sub-plate portions arranged at intervals can optimize stress distribution of the guard plate, and reduce the risk of excessive deformation of the guard plate due to an excessively large force on a single point. The arrangement of the partition bar can be used as an assembling reference for the sub-plate portion, which is conducive to improving assembling efficiency of the guard plate.

In one or more embodiments of the first aspect, the anti-puncture plate portion is of a flat plate structure.

In the above solution, since the anti-puncture plate portion is of a flat plate structure, a risk of stress concentration in the anti-puncture plate portion is low and structural stability is high.

In one or more embodiments of the first aspect, the guard plate is of a flat plate structure.

In the above solution, since the guard plate is of a flat plate structure, on the one hand, the flat plate-shaped guard plate can be processed with an extrusion molding process, which is conducive to improving production efficiency of the guard plate. On the other hand, a difficulty of assembling the box body and the guard plate can be reduced. On another hand, it is also conducive to reducing a risk of sealing failure between the box body and the guard plate.

In one or more embodiments of the first aspect, the width of the guard plate is W, and in a width direction of the guard plate, the size of the anti-puncture plate portion is w, and 0.6≤w/W<1.

In the above solution, in the width direction of the guard plate, the size of the anti-puncture plate portion is set within a reasonable range, so that while the guard plate has a high structural strength and a large anti-puncture area, the weight of the guard plate can also be controlled within a reasonable range, thereby enabling the battery apparatus to have a high energy density.

In one or more embodiments of the first aspects, the length of the guard plate is L, and in a length direction of the guard plate, the size of the anti-puncture plate portion is l, and 0.6≤l/L<1.

In the above solution, in the length direction of the guard plate, the size of the anti-puncture plate portion is set within a reasonable range, so that while the guard plate has a high structural strength and an anti-puncture region having a large area, the weight of the guard plate can also be controlled within a reasonable range, thereby enabling the battery apparatus to have a high energy density.

In one or more embodiments of the first aspect, the plate thickness of the resin frame portion is equal to the plate thickness of the anti-puncture plate portion.

In the above solution, the plate thickness of the resin frame portion is equal to the plate thickness of the anti-puncture plate portion. On the one hand, it is conducive to making the first fiber resin layer and the second fiber resin layer fit more closely with surfaces of the intermediate layer, thereby facilitating improving a connection strength between the first fiber resin layer, the second fiber resin layer, and the intermediate layer. On the other hand, the risk of stress concentration between the resin frame portion and the anti-puncture plate portion can be reduced.

In one or more embodiments of the first aspect, the layer thickness of the second fiber resin layer is greater than the layer thickness of the first fiber resin layer.

In the above solution, since the layer thickness of the second fiber resin layer is greater than the layer thickness of the first fiber resin layer, the second fiber resin layer has a high structural strength, which can reduce the risk of excessive deformation of the guard plate caused by an external force acting on the guard plate through the second fiber resin layer and reduce the risk of corrosion of the anti-puncture plate portion.

In one or more embodiments of the first aspect, the layer thickness of the first fiber resin layer is h1, and 0<h1≤1.2 mm.

In the above solution, the layer thickness of the first fiber resin layer is set within a reasonable range. The first fiber resin layer has a high ability to resist impact of the external force, thereby reducing the risk of corrosion of the anti-puncture plate portion, while also enabling the battery apparatus to have a high energy density and low manufacturing cost.

In one or more embodiments of the first aspect, the layer thickness of the second fiber resin layer is h2, and 0<h2≤1.2 mm.

In the above solution, the layer thickness of the second fiber resin layer is set within a reasonable range. The second fiber resin layer has a high ability to resist impact of the external force, thereby reducing the risk of corrosion of the anti-puncture plate portion, while also enabling the battery apparatus to have a high energy density and low manufacturing cost.

In one or more embodiments of the first aspect, the plate thickness of the anti-puncture plate portion is h3, and 0<h3≤1 mm.

In the above solution, the plate thickness of the anti-puncture plate portion is set within a reasonable range. While the guard plate has a high ability to resist impact of the external force, the battery apparatus may be further enabled to have a high energy density and low manufacturing cost.

In one or more embodiments of the first aspect, the guard plate further includes an adhesive layer, and the first fiber resin layer and the intermediate layer are bonded to each other through the adhesive layer; and/or the second fiber resin layer and the intermediate layer are bonded to each other through the adhesive layer.

In the above solution, the arrangement of the adhesive layer can improve the connection strength between the intermediate layer and the first fiber resin layer, and reduce the risk of corrosion of the anti-puncture plate portion due to separation of the intermediate layer from the first fiber resin layer and/or the second fiber resin layer.

In one or more embodiments of the first aspect, the adhesive layer includes a resin film layer.

In the above solution, the resin film layer is used as the adhesive layer. On the one hand, it is more tightly bonded to the fiber resin layer. On the other hand, it is conducive to reducing the weight of the guard plate and improving the energy density of the battery apparatus.

In one or more embodiments of the first aspect, the layer thickness of the adhesive layer is h4, and 0<h4≤0.5 mm.

In the above solution, the layer thickness of the adhesive layer is set within a reasonable range. While a strong connection strength can be achieved between the fiber resin layer and the intermediate layer, the battery apparatus can have a high energy density.

In one or more embodiments of the first aspect, a region of the guard plate corresponding to the anti-puncture plate portion is recessed in the first direction to form an accommodating cavity, and a cavity bottom surface of the accommodating cavity is convex in a direction opposite to the first direction to form a countersunk platform, and the countersunk platform encloses to form a counterbore for a first fastener to pass through.

In the above solution, the first fastener is received in the counterbore. On the one hand, outward protrusion of the first fastener can be reduced, which is conducive to reducing the risk of the first fastener being scratched, thereby facilitating a high connection strength between the guard plate and the box body. On the other hand, it is also conducive to reducing the size of the battery, thereby enabling the battery apparatus to have a high energy density.

In one or more embodiments of the first aspect, the protruding height of the countersunk platform is H, and 0 mm<H≤10 mm.

In the above solution, the protruding height of the countersunk platform is set within a reasonable range. On the one hand, it can provide a large assembling space for the first fastener and reduce the difficulty of assembling the first fastener. On the other hand, it enables the guard plate as a whole to have a high structural strength.

In one or more embodiments of the first aspect, the first fiber resin layer includes a plurality of layers of first fiber reinforced prepregs stacked one on another; and the second fiber resin layer includes a plurality of layers of second fiber reinforced prepregs stacked one on another.

In the above solution, while improving the strength and rigidity of the guard plate, the multi-layer structure helps to disperse stress and reduce stress concentration, thereby improving the fatigue resistance of the material.

In one or more embodiments of the first aspect, the anti-puncture plate portion is a steel plate, and an outer surface of the steel plate is provided with a galvanized layer, a galvanized iron alloy layer, or an electrophoretic paint protective layer.

In the above solution, the outer surface of the steel plate is provided with a galvanized layer, a galvanized iron alloy layer, or an electrophoretic paint protective layer. The reinforcing layer can have a high wear resistance.

In one or more embodiments of the first aspect, the first fiber resin layer and the second fiber resin layer are independently selected from glass fiber reinforced polyamide resin parts, glass fiber reinforced polypropylene resin parts, glass fiber reinforced polyethylene resin parts, glass fiber reinforced polycarbonate resin parts or glass fiber reinforced polystyrene resin parts.

In a second aspect, the present application provides an electrical apparatus, including the battery apparatus in one or more of the above embodiments, and the battery apparatus is configured to provide electric energy.

In the above solution, the battery apparatus in one or more of the above embodiments has high reliability, and therefore, the electrical apparatus including the battery apparatus in one or more of the above embodiments also has high reliability.

The above illustrations are merely brief descriptions for the technical solutions of the present application. Specific embodiments of the present application are described specifically in the following to understand the technical solutions of the present application more clearly and implement the present application according to content of the specification, and to make other objectives, features and advantages of the present application more comprehensible.

### BRIEF DESCRIPTION OF DRAWINGS

By reading the detailed description of the preferred embodiments below, various other advantages and benefits will become apparent to those of ordinary skill in the art. The drawings are used for the purpose of illustrating the preferred embodiments only and are not to be considered a limitation to the present application. Moreover, in all of the drawings, like reference numerals represent like components. In the drawings:
FIG. 1 is a schematic structural diagram of a vehicle according to some embodiments of the present application;
FIG. 2 is a schematic structural diagram of a battery according to some embodiments of the present application;
FIG. 3 is an exploded schematic diagram of a guard plate according to some embodiments of the present application;
FIG. 4 is a schematic structural diagram of an intermediate layer shown in FIG. 3;
FIG. 5 is a schematic structural diagram of a guard plate shown in FIG. 3;
FIG. 6 is a sectional diagram along a line A-A in FIG. 5;
FIG. 7 is a partial enlarged diagram of a part B in FIG. 6.
FIG. 8 is a partial enlarged diagram of a part C in FIG. 7;
Fig. 9 is a schematic structural view of a box body according to some embodiments of the present application;
FIG. 10 is a cross-sectional diagram along a line D-D in FIG. 9; and
FIG. 11 is a partial enlarged diagram of a part E in FIG. 10.

Reference numerals in the Detailed Description are as follows:
1000-Vehicle; 1100-Battery apparatus; 1200-Controller; 1300-Motor; 100-Guard plate; 1001-Accommodating cavity; 110-First fiber resin layer; 120-Intermediate layer; 121-Resin frame portion; 1211-Partition bar; 122-Anti-puncture plate portion; 1221-Sub-plate portion; 130-Second fiber resin layer; 140-Adhesive layer; 150-Countersunk platform; 151-Counterbore; 200-Box main body; 300-Middle beam; 410-First fastener; 420-Second fastener; 500-Sealing member; 10-Box body; 11-First part; 12-Second part; 20-Battery cell; 30-Heat exchange plate; 31-Flow channel; 32-Surface protrusion.

### DETAILED DESCRIPTION

Embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF DESCRIPTION OF DRAWINGS are intended to cover non-exclusive inclusion.

In the description of the embodiments of the present application, the technical terms "first", "second", etc., are used only to distinguish between different objects and are not to be understood as indicating or implying a relative importance or implicitly specifying the number, particular order, or primary and secondary relationship of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "a plurality of" refers to two or more (including two). Similarly, "a plurality of groups" refers to two or more (including two) groups, and "a plurality of pieces" refers to two or more (including two) pieces.

In the embodiments of the present application, a battery cell may be a secondary battery, and the secondary battery refers to a battery cell that may be used continually by activating an active material by means of charging after the battery cell is discharged.

The battery cell includes but is not limited to a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead storage battery and the like.

The battery cell generally includes an electrode assembly. The electrode assembly includes a positive electrode, a negative electrode, and a spacer. In a charging and discharging process of the battery cell, active ions (such as lithium ions) are intercalated and de-intercalated between the positive electrode and the negative electrode in a reciprocating manner. The spacer is arranged between the positive electrode and the negative electrode, so that the risk of short circuit of the positive electrode and the negative electrode can be reduced, and moreover, the active ions can pass.

In some embodiments, the spacer is a separator. The separator can be any well-known porous separator with desirable chemical stability and mechanical stability.

In some embodiments, the electrode assembly is of a wound structure. The positive electrode plate and the negative electrode plate are wound into the wound structure.

In some embodiments, the electrode assembly is of a stacked structure.

In some embodiments, the electrode assembly may be cylindrical, flat, or polygonal prism-shaped.

In some embodiments, the battery cell may include a shell. The shell is configured to package components such as the electrode assembly and electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch cell, or a battery cell in another shape. The prismatic battery cell includes a square-shell battery cell, a blade-shaped battery cell, and a polygonal prismatic battery cell. For example, the polygonal prismatic battery cell may be a hexagonal prismatic battery cell, or the like.

The battery apparatus mentioned in the embodiments of the present disclosure refers to one or more battery cell assemblies for providing voltage and capacity. The battery cell assembly may include a plurality of battery cells which are connected in series, in parallel, or in parallel-series through bus components.

In some embodiments, the battery cell assembly is generally formed by arranging a plurality of battery cells. As an example, the battery cell assembly may be a battery module, and the battery module is formed by arranging and fixing a plurality of battery cells into an independent module. As an example, a battery module may be formed by bundling a plurality of battery cells by cable ties.

In some embodiments, the battery apparatus may be a battery pack. The battery pack includes a box body and one or more battery cell assemblies. The battery cell assembly is accommodated in the box body.

As an example, the battery cell assembly may be a battery module, and the battery cell assembly may be accommodated in the box body by fixing the battery module in the box body.

As an example, the battery cell assembly may also be accommodated in the box body by directly fixing a plurality of battery cells in the box body.

In some embodiments, the box body may serve as a part of a chassis structure of a vehicle. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus includes an energy storage container, an energy storage electric cabinet, and the like.

The following description will primarily focus on rectangular battery cells. It should be understood that the embodiments described below are also applicable in certain aspects to cylindrical battery cells, pouch cells, or blade-shaped battery cells.

In the development of the battery technologies, it is needed to consider many design factors at the same time, such as reliability, cycle life, discharge capacity, charge-discharge rate and other performance parameters, in addition, it is also necessary to consider the reliability of the battery apparatus.

A common battery apparatus generally includes a box body and a guard plate. The guard plate is arranged at the bottom of the box body. In order to improve the ability of the guard plate to resist an impact from the bottom of the battery apparatus, the guard plate is generally provided with an anti-puncture plate portion. In order to further reduce the risk of corrosion of the anti-puncture plate portion, the anti-puncture plate portion is wrapped with two corrosion-resistant layers, and then the two corrosion-resistant layers and the anti-puncture plate portion are processed into one piece and connected to the box body, thereby completing the assembling of the guard plate. In order to maintain a high structural stability of the anti-puncture plate portion, when connecting the anti-puncture plate portion and the box body, a region where the two are connected generally avoids a region where the anti-puncture plate portion is arranged, that is, a part of the guard plate located in the region where the two are connected generally only includes two corrosion-resistant layers, and therefore, the connection stability between the box body and the guard plate is low, and the reliability of the battery apparatus is poor.

In view of this, the present application provides a battery apparatus, the battery apparatus includes a box body, a battery cell, and a guard plate, where the battery cell is accommodated in the box body. In a direction of gravity, the guard plate is arranged at the bottom of the battery cell, and the guard plate includes a first fiber resin layer, an intermediate layer, and a second fiber resin layer stacked in sequence in a first direction, the intermediate layer includes a resin frame portion and an anti-puncture plate portion, the anti-puncture plate portion is located in the resin frame portion, and the resin frame portion is connected between the first fiber resin layer and the second fiber resin layer. The intermediate layer includes the anti-puncture plate portion and the anti-puncture plate portion is located between the first fiber resin layer and the second fiber resin layer the risk of corrosion of the anti-puncture plate portion can be reduced. When the guard plate is subjected to an external force, the anti-puncture plate portion can improve an ability of the guard plate to resist the external force, thereby reducing a risk of excessive deformation of the guard plate. At the same time, the resin frame portion can further improve the strength and rigidity of the guard plate, thereby improving an ability of the guard plate to resist an external impact, and is also conducive to improving the reliability of the battery apparatus. In an embodiment where the guard plate is connected to the box body via the resin frame portion, arrangement of the resin frame portion may further improve connection stability between the guard plate and the box body.

The technical solution described in the embodiment of the present application is applicable to a battery cell, a battery apparatus, and an electrical apparatus using the battery apparatus.

The electrical apparatus may be a vehicle, a mobile phone, a portable device, a laptop, a ship, a spacecraft, an electric toy, an electric tool, and the like. The spacecraft includes an airplane, a rocket, a space shuttle, a spaceship, and the like. The electric toy includes fixed or mobile electric toys, such as a game machine, an electric vehicle toy, an electric ship toy, an electric airplane toy, and the like. The electric tool includes an electric metal cutting tool, an electric grinding tool, an electric assembling tool, an electric tool for railways, for example, an electric drill, an electric grinding machine, an electric wrench, an electric screwdriver, an electric hammer, an electric impact drill, a concrete vibrator, and an electric planer. The electrical apparatus may also be an energy storage apparatus, for example, an energy storage electric cabinet, an energy storage container, and the like.

For the convenience of description in the following embodiments, an electrical apparatus being a vehicle 1000 according to an embodiment of the present application is taken as an example for the description.

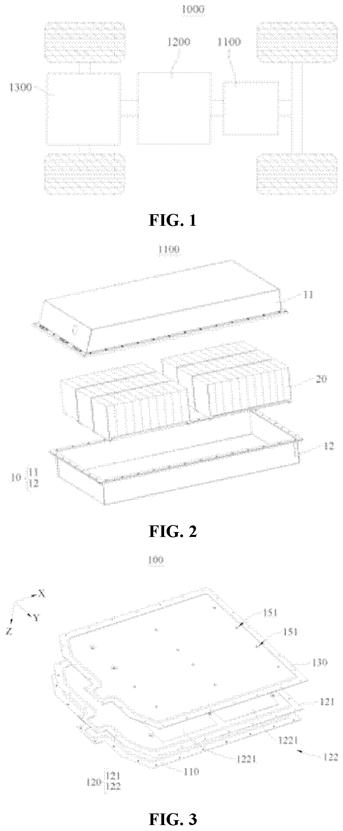

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be an all-electric vehicle, a hybrid vehicle, an extended-range electric vehicle, or the like. A battery apparatus 1100 is arranged in the vehicle 1000. The battery apparatus 1100 may be arranged at the bottom, head, or tail of the vehicle 1000. The battery apparatus 1100 may be configured to supply power to the vehicle 1000. For example, the battery apparatus 1100 may be used as an operating power source of the vehicle 1000. The vehicle 1000 may further include a controller 1200 and a motor 1300. The controller 1200 is configured to control the battery apparatus 1100 to supply power to the motor 1300, for example, for the operating power demand when the vehicle 1000 is starting, navigating, and driving.

In some embodiments of the present application, the battery apparatus 1100 may not only be used as an operating power source for the vehicle 1000, but also as a driving power source for the vehicle 1000, to replace or partially replace fuel or natural gas to provide driving power for the vehicle 1000.

Referring to FIG. 2, the battery apparatus 1100 includes a box body 10 and a battery cell 20, where the battery cell 20 is accommodated within the box body 10. The box body 10 is configured to provide an accommodating space for the battery cell 20, and the box body 10 can be of various structures.

In some embodiments, the box body 10 may include a first part 11 and a second part 12, the first part 11 and the second part 12 covering each other, and the first part 11 and the second part 12 together defining the accommodating space for accommodating the battery cell 20. The second part 12 may be of a hollow structure with an opening at one end, and the first part 11 may be of a plate-like structure, where the first part 11 covers the opening side of the second part 12 so that the first part 11 and the second part 12 together define the accommodation space. The first part 11 and the second part 12 may each be of a hollow structure with an opening at one end, where the opening side of the first part 11 covers the opening side of the second part 12. Of course, the box body 10 formed by the first part 11 and the second part 12 may be of a variety of shapes, such as a cylinder and a cuboid.

In the battery apparatus 1100, there may be a plurality of battery cells 20, and the plurality of battery cells 20 may be connected in series or in parallel or in parallel-series, where the parallel-series connection means that the plurality of battery cells 20 are connected in both series and parallel.

In an embodiment, the plurality of battery cells 20 may be directly connected in series, in parallel, or in parallel-series, and then the entirety formed by the plurality of battery cells 20 is accommodated in the box body 10. Of course, the battery apparatus 1100 may also be an entirety formed by connecting the plurality of battery cells 20 in series, in parallel, or in parallel-series to form battery modules and then connecting the plurality of battery modules in series, in parallel, or in parallel-series, and is then accommodated in the box body 10. The battery apparatus 1100 may further include other structures. For example, the battery apparatus 1100 may further include a bus component for electrically connecting the plurality of battery cells 20.

In the present application, the battery cell 20 may include a lithium-ion secondary battery, a lithium-ion battery, a lithium-sulfur battery, a sodium-lithium-ion battery, a sodium-ion battery, a lithium metal battery, a magnesium-ion battery, or the like, which is not limited in embodiments of the present application. The battery cell 20 may be in a cylindrical shape, a flat shape, a cuboid shape, or another shape, which is also not limited in the embodiments of the present application. Depending on the way of encapsulation, the battery cells 20 are generally classified into three types: cylindrical battery cells 20, rectangular battery cells 20, and pouch cells 20.

Referring to FIG. 3 to FIG. 8 , schematic diagrams of a guard plate 100 according to an embodiment of the present application are representatively shown. In the following example embodiments, the guard plate 100 provided in the embodiment of the present application is described by taking a battery apparatus 1100 applied to an electrical apparatus as an example. It is easy for those skilled in the art to understand that in order to apply the relevant design of the guard plate 100 provided in the embodiment of the present application to other application objects, various modifications, additions, substitutions, deletions, or other changes are made to the following embodiments, and these changes still fall within the scope of the principles of the electrical apparatus provided in the embodiment of the present application.

According to some embodiments of the present application, referring to FIG. 3 to FIG. 8, the present application provides a battery apparatus 1100, the battery apparatus 1100 including a box body 10, a battery cell 20, and a guard plate 100, where the battery cell 20 is arranged in the box body 10. In a direction of gravity, the guard plate 100 is arranged at the bottom of the battery cell 20, and the guard plate 100 includes a first fiber resin layer 110, an intermediate layer 120, and a second fiber resin layer 130 stacked in sequence in a first direction, the intermediate layer 120 includes a resin frame portion 121 and an anti-puncture plate portion 122, the anti-puncture plate portion 122 is located in the resin frame portion 121, and the resin frame portion 121 is connected between the first fiber resin layer 110 and the second fiber resin layer 130.

The first fiber resin layer 110 may also be referred to as a first fiber resin layer, and the second fiber resin layer 130 may also be referred to as a second fiber resin layer.

In some embodiments, the guard plate 100 may refer to a component for protecting the battery cells 20 in the battery apparatus 1100.

In some embodiments, the guard plate 100 may be configured to bear the battery cells 20. In some other embodiments, the battery apparatus 1100 further includes a heat exchange plate 30, the heat exchange plate 30 is arranged between the guard plate 100 and the battery cell 20, and the heat exchange plate 30 is configured to bear the battery cell 20.

The first direction may refer to a thickness direction of the guard plate 100. As shown in FIG. 3, the guard plate 100 has the thickness direction, a length direction, and a width direction. The thickness direction of the guard plate 100 may refer to a Z direction in the figure, the width direction of the guard plate 100 may refer to a Y direction in the figure, and the length direction of the guard plate 100 may refer to an X direction in the figure.

The intermediate layer 120 may refer to a layer located between the first fiber resin layer 110 and the second fiber resin layer 130. The intermediate layer 120 plays a major protective role and can prevent external foreign objects from puncturing the guard plate 100. In other words, when the guard plate 100 is punctured by foreign objects, the arrangement of the intermediate layer 120 can reduce the risk of the foreign objects puncturing the guard plate 100 and damaging the battery cell 20.

The intermediate layer 120 includes a resin frame portion 121 and an anti-puncture plate portion 122. The anti-puncture plate portion 122 may refer to a portion of the intermediate layer 120 located in the middle. The resin frame portion 121 may be annular and arranged around the anti-puncture plate portion 122. In some embodiments, the resin frame portion 121 may refer to a portion of the intermediate layer 120 located at an edge. The shape of the resin frame portion 121 may include, but is not limited to, square shape, U shape, double-square shape, grid frame shape, or the like.

In some embodiments, a region of a connection between the box body 10 and the guard plate 100 is located inside the resin frame portion 121. Taking a fastener connection method as an example, the fastener passes through the second fiber resin layer 130, the resin frame portion 121, and the first fiber resin layer 110 in sequence and is then connected to the box body 10. Taking welding or heat-melting connection as an example, in the first direction, at least part of a projection of a weld mark formed by welding or heat-melting connection is located inside the resin frame portion 121.

In some embodiments, the first fiber resin layer 110, the resin frame portion 121, and the second fiber resin layer 130 may be connected by a structural adhesive.

In some embodiments, the first fiber resin layer 110, the resin frame portion 121, and the second fiber resin layer 130 may be bonded together by the adhesiveness of the resin portions thereof and the bonding property of the resin frame portion 121.

In some embodiments, the arrangement of the first fiber resin layer 110 and the second fiber resin layer 130 can enable the guard plate 100 to have a strong fireproof capability, for example, a fiber resin composite material including fibers such as carbon fiber, aramid fiber, or glass fiber.

In some embodiments, the guard plate 100 can be connected to the box body 10 by a fastener passing through the first fiber resin layer 110, the second fiber resin layer 130, and the resin frame portion 121. The fastener passes through the resin frame portion 121, and therefore, a risk of fastener failure is low and the connection stability between the guard plate 100 and the box body 10 is high.

In some embodiments, the first fiber resin layer 110, the second fiber resin layer 130, and the resin frame portion 121 may be connected by various methods, such as riveting, resin adhesive connection, gluing, laser welding, and hot pressing. Due to the arrangement of the resin frame portion 121, compared with the embodiment without arranging the resin frame portion 121, the connection strength between the guard plate 100 and the box body 10 is improved while not interfering with an anti-puncture component.

In some embodiments, the arrangement of the first fiber resin layer 110 or the second fiber resin layer 130 can have an effect of preventing the intermediate layer 120 from corrosion.

The material of the resin frame portion 121 may include thermosetting resin, for example, epoxy resin, phenolic resin, urea-formaldehyde resin, melamine resin, unsaturated polyester resin, silicone resin polyurethane, and the like. Thermoplastic resins may also be included, for example, polyethylene, polypropylene, polyvinyl chloride, polystyrene, and the like. Of course, the material of the resin frame portion 121 may also include but is not limited to polyamide, polyoxymethylene, polycarbonate, polyphenylene ether, polysulfone, rubber, and the like.

In a technical solution of embodiments of the present application, the intermediate layer 120 includes the anti-puncture plate portion 122 and the anti-puncture plate portion 122 is located between the first fiber resin layer 110 and the second fiber resin layer 130, and therefore, the risk of corrosion of the anti-puncture plate portion 122 can be reduced. When the guard plate 100 is subjected to an external force, the anti-puncture plate portion 122 can improve an ability of the guard plate 100 to resist the external force, thereby reducing a risk of excessive deformation of the guard plate 100. At the same time, the resin frame portion 121 can further improve the strength and rigidity of the guard plate 100, thereby improving an ability of the guard plate 100 to resist an external impact, and is also conducive to improving the reliability of the battery apparatus 1100. In an embodiment where the guard plate 100 is connected to the box body 10 via the resin frame portion 121, arrangement of the resin frame portion 121 may further improve connection stability between the guard plate 100 and the box body 10.

According to some embodiments of the present application, referring to FIG. 3 to FIG. 8, the anti-puncture plate portion 122 includes a plurality of sub-plate portions 1221 arranged at intervals, the resin frame portion 121 is provided with a partition bar 1211, and the partition bar 1211 is arranged between two adjacent sub-plate portions 1221.

The partition bar 1211 is a part of the resin frame portion 121, and the partition bar 1211 is also made of a resin material. The partition bar 1211 divides the resin frame portion 121 into a plurality of regions. The plurality of sub-plate portions 1221 are installed in the various regions in a one-to-one manner, so that the partition bar 1211 separates two adjacent sub-plate portions 1221. The quantity of the sub-plate portions 1221 may be, but is not limited to, two, three, or four.

For example, the quantity of the sub-plate portions 1221 is two, and the two sub-plate portions 1221 are arranged at an interval in the length direction of the guard plate 100. Of course, in other embodiments, the plurality of sub-plate portions 1221 may be arranged in a matrix, or may be arranged at intervals in the width direction of the guard plate 100, which may be designed according to actual design requirements.

In the above solution, the plurality of sub-plate portions 1221 arranged at intervals can optimize stress distribution of the guard plate 100, and reduce the risk of excessive deformation of the guard plate 100 due to an excessively large force on a single point. The arrangement of the partition bar 1211 can be used as an assembling reference for the sub-plate portion 1221, which is conducive to improving assembling efficiency of the guard plate 100.

According to some embodiments of the present application, the anti-puncture plate portion 122 is of a flat plate structure.

The anti-puncture plate portion 122 is of the flat plate structure, which means that in the first direction, two opposite surfaces of the anti-puncture plate portion 122 are planes.

In the above solution, since the anti-puncture plate portion 122 is of a flat plate structure, a risk of stress concentration in the anti-puncture plate portion 122 is low and structural stability is high.

According to some embodiments of the present application, the guard plate 100 is of a flat plate structure.

The guard plate 100 is of the flat plate structure, which means that in the first direction, two opposite surfaces of the guard plate 100 are planes. In some embodiments, the first fiber resin layer 110 and the second fiber resin layer 130 may both be of a flat plate structure.

In the above solution, since the guard plate 100 is of a flat plate structure, on the one hand, the flat plate-shaped guard plate 100 can be processed through an extrusion molding process, which is conducive to improving production efficiency of the guard plate 100. On the other hand, a difficulty of assembling the box body 10 and the guard plate 100 can be reduced. On another hand, it is also conducive to reducing a risk of sealing failure between the box body 10 and the guard plate 100.

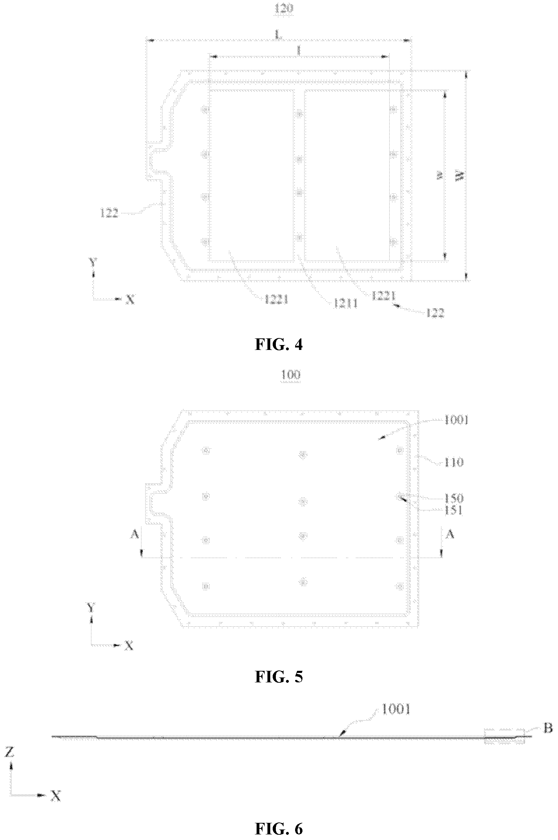

According to some embodiments of the present application, referring to FIG. 4, the width of the guard plate 100 is W, and in a width direction of the guard plate 100, the size of the anti-puncture plate portion 122 is w, and 0.6≤w/W<1.

The width W of the guard plate 100 may refer to a distance between two opposite surfaces of the guard plate 100 in the width direction.

In the width direction of the guard plate 100, the size w of the anti-puncture plate portion 122 may refer to a distance between two opposite surfaces of the anti-puncture plate portion 122 in the width direction of the guard plate 100.

0.6≤w/W<1. It is understandable that, w/W<1, so that in the width direction of the guard plate 100, the resin frame portion 121 occupies a certain space to connect the first fiber resin layer 110 and the second fiber resin layer 130; and w/W≥0.6, so that in the width direction of the guard plate 100, the resin frame portion 121 occupies a small space, and the anti-puncture plate portion 122 occupies a large space, which can provide a protection for the battery cell 20 and the protective effect of the guard plate 100 is good.

In some embodiments, the value of w/W may be 0.6 and any numeral between 0.6 and 1. For example, the value of w/W may be but is not limited to 0.6, 0.62, 0.64, 0.66, 0.68, 0.7, 0.72, 0.74, 0.76, 0.78, 0.8, 0.82, 0.84, 0.86, 0.88, 0.9, 0.92, 0.94, 0.96, 0.98, and 0.99.

In the above solution, the size of the anti-puncture plate portion 122 is set within a reasonable range in the width direction of the guard plate 100. While the guard plate 100 has a high structural strength and a large anti-puncture area, the weight of the guard plate 100 can also be controlled within a reasonable range, thereby enabling the battery apparatus 1100 to have a high energy density.

According to some embodiments of the present application, referring to FIG. 4, the length of the guard plate 100 is L, and in a length direction of the guard plate 100, the size of the anti-puncture plate portion 122 is l, and 0.6≤l/L<1.

The length L of the guard plate 100 may refer to a distance between two opposite surfaces of the guard plate 100 in the length direction.

In the length direction of the guard plate 100, the size l of the anti-puncture plate portion 122 may refer to a distance between two opposite surfaces of the anti-puncture plate portion 122 in the length direction of the guard plate 100.

0.6≤l/L<1. It is understandable that l/L<1, so that in the length direction of the guard plate 100, the resin frame portion 121 occupies a certain space to connect the first fiber resin layer 110 and the second fiber resin layer 130; and l/L≥0.6, so that in the length direction of the guard plate 100, the resin frame portion 121 occupies a small space, and the anti-puncture plate portion 122 occupies a large space, which can provide a protection for the battery cell 20 and the protective effect of the guard plate 100 is good.

In some embodiments, the value of l/L may be 0.6 and any numeral between 0.6 and 1. For example, the value of w/W may be but is not limited to 0.6, 0.62, 0.64, 0.66, 0.68, 0.7, 0.72, 0.74, 0.76, 0.78, 0.8, 0.82, 0.84, 0.86, 0.88, 0.9, 0.92, 0.94, 0.96, 0.98, and 0.99.

In the above solution, the size of the anti-puncture plate portion 122 is set within a reasonable range in the length direction of the guard plate 100. While the guard plate 100 has a high structural strength and a large anti-puncture area, the weight of the guard plate 100 can also be controlled within a reasonable range, thereby enabling the battery apparatus 1100 to have a high energy density.

According to some embodiments of the present application, referring to FIG. 5 to FIG. 8, the plate thickness of the resin frame portion 121 is equal to the plate thickness of the anti-puncture plate portion 122.

The plate thickness h5 of the resin frame portion 121 may refer to a distance between two opposing surfaces of the resin frame portion 121 in the first direction.

The plate thickness h3 of the anti-puncture plate portion 122 may refer to a distance between two opposite surfaces of the anti-puncture plate portion 122 in the first direction.

In the above solution, the plate thickness of the resin frame portion 121 is equal to the plate thickness of the anti-puncture plate portion 122. On the one hand, it is conducive to making the first fiber resin layer 110 and the second fiber resin layer 130 fit more closely with surfaces of the intermediate layer 120, thereby facilitating improving a connection strength between the first fiber resin layer 110, the second fiber resin layer 130, and the intermediate layer 120. On the other hand, the risk of stress concentration between the resin frame portion 121 and the anti-puncture plate portion 122 can be reduced.

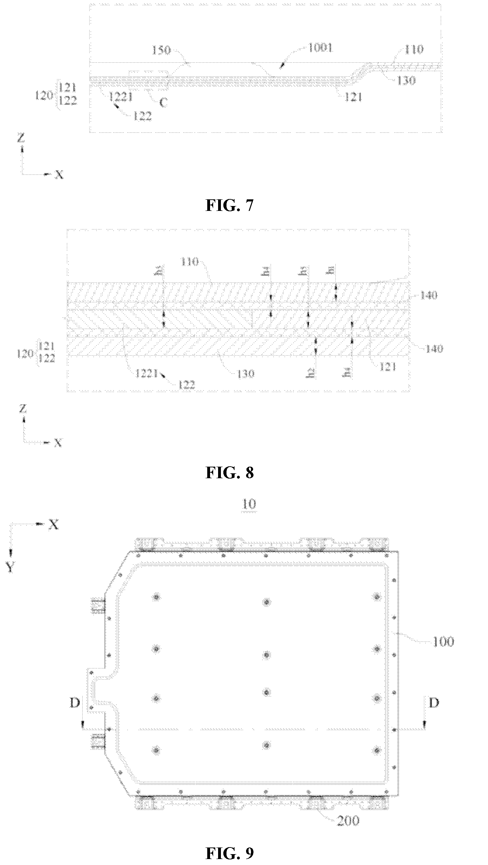

According to some embodiments of the present application, referring to FIG. 8, the layer thickness of the second fiber resin layer 130 is greater than the layer thickness of the first fiber resin layer 110.

The layer thickness h1 of the first fiber resin layer 110 may refer to a distance between two opposite surfaces of the first fiber resin layer 110 in the first direction.

The layer thickness h2 of the second fiber resin layer 130 may refer to a distance between two opposite surfaces of the second fiber resin layer 130 in the first direction.

In the above solution, since the layer thickness of the second fiber resin layer 130 is greater than the layer thickness of the first fiber resin layer 110, the second fiber resin layer 130 has a high structural strength, which can reduce the risk of excessive deformation of the guard plate 100 caused by an external force acting on the guard plate 100 through the second fiber resin layer 130 and reduce the risk of corrosion of the anti-puncture plate portion 122.

According to some embodiments of the present application, referring to FIG. 8, the layer thickness of the first fiber resin layer 110 is h1, and 0<h1≤1.2 mm.

0<h1≤1.2 mm. It is understandable that, h1>0, so that the first fiber resin layer 110 has a certain thickness, which can protect the anti-puncture plate portion 122; and h1≤1.2 mm, so that the thickness of the first fiber resin layer 110 is not too thick, which is conducive to reducing the manufacturing cost of the guard plate 100, and also capable of reducing the space occupied by the guard plate 100 on the battery apparatus 1100, thereby being conducive to reducing the size of the battery apparatus 1100.

In some embodiments, the value of h1 may be 1.2 mm and any numeral between 0 mm and 1.2 mm. For example, the value of h1 may be but is not limited to 0.1 mm, 0.2 mm, 0.3 mm, 0.4 mm, 0.5 mm, 0.6 mm, 0.7 mm, 0.8 mm, 0.9 mm, 1 mm, 1.1 mm, and 1.2 mm.

In the above solution, the layer thickness of the first fiber resin layer 110 is set within a reasonable range. The first fiber resin layer 110 has a high ability to resist impact of the external force, thereby reducing the risk of corrosion of the anti-puncture plate portion 122, while also enabling the battery apparatus 1100 to have a high energy density and low manufacturing cost.

According to some embodiments of the present application, referring to FIG. 8, the layer thickness of the second fiber resin layer 130 is h2, and 0<h2≤1.2 mm.

0<h2≤1.2 mm. It is understandable that, h2>0, so that the second fiber resin layer 130 has a certain thickness, which can protect the anti-puncture plate portion 122; and h2≤1.2 mm, so that the thickness of the second fiber resin layer 130 is not too thick, which is conducive to reducing the manufacturing cost of the guard plate 100, and also capable of reducing the space occupied by the guard plate 100 on the battery apparatus 1100, thereby being conducive to reducing the size of the battery apparatus 1100.

In some embodiments, the value of h2 may be 1.2 mm and any numeral between 0 mm and 1.2 mm. For example, the value of h2 may be but is not limited to 0.1 mm, 0.2 mm, 0.3 mm, 0.4 mm, 0.5 mm, 0.6 mm, 0.7 mm, 0.8 mm, 0.9 mm, 1 mm, 1.1 mm, and 1.2 mm.

In the above solution, the layer thickness of the second fiber resin layer 130 is set within a reasonable range. The second fiber resin layer 130 has a high ability to resist impact of the external force, thereby reducing the risk of corrosion of the anti-puncture plate portion 122, while also enabling the battery apparatus 1100 to have a high energy density and low manufacturing cost.

According to some embodiments of the present application, referring to FIG. 8, the plate thickness of the anti-puncture plate portion 122 is h3, and 0<h3≤1 mm.

0<h3≤1 mm. It is understandable that, h3>0, so that the anti-puncture plate portion 122 has a certain thickness, which can play an anti-puncture role; and h3≤1 mm, so that the thickness of the anti-puncture plate portion 122 is not too thick, which is conducive to reducing the manufacturing cost of the guard plate 100.

In some embodiments, the value of h3 may be 1 mm and any numeral between 0 mm and 1 mm. For example, the value of h3 may be but is not limited to 0.1 mm, 0.2 mm, 0.3 mm, 0.4 mm, 0.5 mm, 0.6 mm, 0.7 mm, 0.8 mm, 0.9 mm, and 1 mm.

In the above solution, the plate thickness of the anti-puncture plate portion 122 is set within a reasonable range. While the guard plate 100 has a high ability to resist impact of the external force, the battery apparatus 1100 may be further enabled to have a high energy density and low manufacturing cost.

According to some embodiments of the present application, referring to FIG. 8, the guard plate 100 further includes an adhesive layer 140, and the first fiber resin layer 110 and the intermediate layer 120 are bonded to each other through the adhesive layer 140; and/or the second fiber resin layer 130 and the intermediate layer 120 are bonded to each other through the adhesive layer 140.

The adhesive layer 140 may refer to a layered material that can bond two components. The adhesive layer 140 may refer to a layer-shaped structure formed after glue applied between the two components is cured, or a layer-shaped component with adhesive properties on both sides, such as a double-sided tape. Certainly, the adhesive layer may also refer to other structures.

In the above solution, the arrangement of the adhesive layer 140 can improve the connection strength between the intermediate layer 120 and the first fiber resin layer 110, and reduce the risk of corrosion of the anti-puncture plate portion 122 due to separation of the intermediate layer 120 from the first fiber resin layer 110 and/or the second fiber resin layer 130.

According to some embodiments of the present application, referring to FIG. 8, the adhesive layer 140 includes a resin film layer.

The adhesive layer 140 adopts a resin film structure. The resin film may refer to a material used for bonding. The principle is forming a uniform and durable bonding surface on the surface of the resin film through the property of the resin, thereby achieving a bonding effect, for example, double-sided tape, hot melt adhesive film, epoxy resin film, and the like.

In the above solution, the resin film layer is used as the adhesive layer 140. On the one hand, it is more tightly bonded to the fiber resin layer. On the other hand, it is conducive to reducing the weight of the guard plate 100 and improving the energy density of the battery apparatus 1100.

According to some embodiments of the present application, referring to FIG. 8, the layer thickness of the adhesive layer 140 is h4, and 0<h4≤0.5 mm.

The layer thickness h4 of the adhesive layer 140 may refer to a distance between two surfaces of the adhesive layer 140 that are arranged opposite to each other in the first direction. 0<h4≤0.5mm. It is understandable that, h4>0, so that the adhesive layer 140 has a certain thickness and can achieve bonding; and h4≤0.5 mm, so that the thickness of the adhesive layer 140 is not too thick, and the adhesive layer 140 has good bonding ability, which is conducive to reducing the risk of delamination of the guard plate 100 and the waste of materials, thereby reducing production costs.

In some embodiments, the value of h4 may be 0 mm, 0.5 mm, and any numeral between 0 mm and 0.5 mm. For example, the value of h4 may be but is not limited to 0.01 mm, 0.05 mm, 0.1 mm, 0.2 mm, 0.3 mm, 0.4 mm, and 0.5 mm.

In the above solution, the layer thickness of the adhesive layer is set within a reasonable range. While a strong connection strength can be achieved between the fiber resin layer and the intermediate layer 120, the battery apparatus 1100 can have a high energy density.

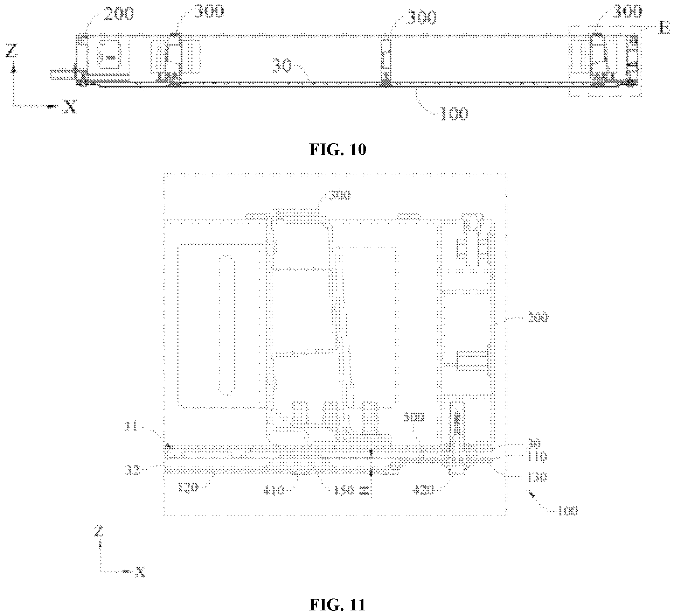

According to some embodiments of the present application, referring to FIG. 9 to FIG. 11, a region of the guard plate 100 corresponding to the anti-puncture plate portion 122 is recessed in the first direction to form an accommodating cavity 1001, and a cavity bottom surface of the accommodating cavity 1001 is convex in a direction opposite to the first direction to form a countersunk platform 150, and the countersunk platform 150 encloses to form a counterbore 151 for a first fastener 410 to pass through.

The region of the guard plate 100 corresponding to the anti-puncture plate portion 122 is recessed in the first direction to form the accommodating cavity 1001. It is understandable that a middle region of the guard plate 100 may be recessed, that is, the guard plate 100 may be a basin-like structure to form the accommodating cavity 1001. The anti-puncture plate portion 122 may also be of a flat plate structure, and an inner side of the resin frame portion 121 is stretched to form a basin-like structure with a bottom opening. The anti-puncture plate portion 122 is located at the cavity bottom wall of the accommodating cavity 1001, thereby protecting the components in the accommodating cavity 1001 and the components located on the side of the accommodating cavity 1001.

When the guard plate 100 is installed on the battery apparatus 1100, the cavity bottom surface of the accommodating cavity 1001 has a protrusion, and the protrusion protrudes out of the cavity bottom surface of the accommodating cavity 1001. The protrusion is the countersunk platform 150. A recessed region is formed on the surface of the guard plate 100 facing away from the accommodating cavity 1001. The recessed region is formed as a counterbore 151. The counterbore 151 can penetrate the cavity bottom surface of the accommodating cavity 1001. In this way, the first fastener 410 can pass through the guard plate 100 and the heat exchange plate 30 from the outside of the battery apparatus 1100 through the counterbore 151, thereby being connected to the middle beam 300, an expansion beam, and other components in the box body 10 to improve the installation reliability of the guard plate 100. The countersunk platform 150 may penetrate the resin frame portion 121 to form a region of the cavity bottom wall of the accommodating cavity 1001, and may also penetrate the anti-puncture plate portion 122. The first fastener 410 may be a bolt, a screw, or the like.

In the above solution, the first fastener 410 is received in the counterbore 151. On the one hand, outward protrusion of the first fastener 410 can be reduced, which is conducive to reducing the risk of the first fastener 410 being scratched, thereby facilitating a high connection strength between the guard plate 100 and the box body 10. On the other hand, it is also conducive to reducing the size of the battery, thereby enabling the battery apparatus 1100 to have a high energy density.

According to some embodiments of the present application, referring to FIG. 9 to FIG. 11, the protruding height of the countersunk platform 150 is H, and 0 mm<H≤10 mm.

The protruding height H of the countersunk platform 150 may refer to a distance between a surface of the countersunk platform 150 facing away from the cavity bottom surface of the accommodating cavity 1001 and the cavity bottom surface of the accommodating cavity 1001.

0 mm<H≤10 mm. It is understandable that, H>0, so that the countersunk platform 150 has a certain protruding height, and a recessed counterbore 151 is formed on the other side of the guard plate 100 to receive the first fastener 410, which is conducive to reducing the outward protruding height of the first fastener 410; and H≤10mm, the protruding height H of the countersunk platform 150 is not too large to reduce the risk of low overall structural strength of the guard plate 100.

In some embodiments, the value of H may be 10 mm and any numeral between 0 mm and 10 mm. For example, the value of H may be but is not limited to 0.1 mm, 1 mm, 2 mm, 3 mm, 4 mm, 5 mm, 6 mm, 7 mm, 8 mm, 9 mm, and 10 mm.

In the above solution, the protruding height of the countersunk platform 150 is set within a reasonable range. On the one hand, it can provide a large assembling space for the first fastener 410 and reduce the difficulty of assembling the first fastener 410. On the other hand, it enables the guard plate 100 as a whole to have a high structural strength.

According to some embodiments of the present application, the first fiber resin layer 110 includes a plurality of layers of first fiber reinforced prepregs stacked one on another; and the second fiber resin layer 130 includes a plurality of layers of second fiber reinforced prepregs stacked one on another.

The fibers in each layer of the first fiber reinforced prepreg are arranged unidirectionally, and fiber arrangement directions of two adjacent layers of the first fiber prepreg are staggered at approximately 90°, and an allowable deviation range of an ply angle of two adjacent layers of first fiber reinforced prepreg unidirectional tapes 111 is ±20. When subjected to a tensile force in a fiber extension direction, the fibers in the first fiber reinforced prepreg can effectively bear the tensile force. By arranging the fiber orientations of adjacent first fiber reinforced prepregs in a roughly 90° cross-ply configuration, it is conducive to improving the uniformity of force on the first fiber resin layer 110 in all directions.

In another embodiment, the fibers in the first fiber reinforced prepreg are interlaced to form a woven fabric.

The fiber arrangement of the second fiber reinforced prepreg is similar to the arrangement of the first fiber reinforced prepreg, and will not be described in detail.

In the above solution, while improving the strength and rigidity of the guard plate 100, the multi-layer structure helps to disperse stress and reduce stress concentration, thereby improving the fatigue resistance of the material.

According to some embodiments of the present application, the anti-puncture plate portion 122 is a steel plate, and an outer surface of the steel plate is provided with a galvanized layer, a galvanized iron alloy layer, or an electrophoretic paint protective layer.

In the above solution, the outer surface of the steel plate is provided with a galvanized layer, a galvanized iron alloy layer, or an electrophoretic paint protective layer. The reinforcing layer can have a high wear resistance.

According to some embodiments of the present application, the first fiber resin layer 110 and the second fiber resin layer 130 are independently selected from glass fiber reinforced polyamide resin parts, glass fiber reinforced polypropylene resin parts, glass fiber reinforced polyethylene resin parts, glass fiber reinforced polycarbonate resin parts or glass fiber reinforced polystyrene resin parts.

According to some embodiments of the present application, referring to FIG. 1, the present application provides an electrical apparatus, including the battery apparatus 1100 in one or more of the above embodiments, the battery apparatus 1100 being configured to provide electric energy.

In the above solution, the battery apparatus 1100 in one or more of the above embodiments has high reliability, and therefore, the electrical apparatus including the battery apparatus 1100 in one or more of the above embodiments also has high reliability.

According to some embodiments of the present application, referring to FIG. 3 to FIG. 8, the present application provides a battery apparatus 1100, the battery apparatus 1100 including a box body 10, a battery cell 20, and a guard plate 100, where the battery cell 20 is arranged in the box body 10. In a direction of gravity, the guard plate 100 is arranged at the bottom of the battery cell 20, and the guard plate 100 includes a first fiber resin layer 110, an intermediate layer 120, and a second fiber resin layer 130 stacked in sequence in a first direction, the intermediate layer 120 includes a resin frame portion 121 and an anti-puncture plate portion 122, the anti-puncture plate portion 122 is located in the resin frame portion 121, and the resin frame portion 121 is connected between the first fiber resin layer 110 and the second fiber resin layer 130. The anti-puncture plate portion 122 includes a plurality of sub-plate portions 1221 arranged at intervals, the resin frame portion 121 is provided with a partition bar 1211, and the partition bar 1211 is arranged between two adjacent sub-plate portions 1221. The anti-puncture plate portion 122 is of a flat plate structure. A plate thickness of the resin frame portion 121 is equal to the plate thickness of the anti-puncture plate portion 122. A layer thickness of the second fiber resin layer 130 is greater than the layer thickness of the first fiber resin layer 110. A region of the guard plate 100 corresponding to the anti-puncture plate portion 122 is recessed in the first direction to form an accommodating cavity 1001, and a cavity bottom surface of the accommodating cavity 1001 is convex in a direction opposite to the first direction to form a countersunk platform 150, and the countersunk platform 150 encloses to form a counterbore 151 for a first fastener 410 to pass through.

A heat exchange plate 30 is further arranged between the battery cell 20 and the guard plate 100. The heat exchange plate 30 may refer to a component that exchanges heat with the battery cell 20. A flow channel 31 is provided in the heat exchange plate 30. A heat exchange medium flows in the heat exchange plate 30, thereby realizing heat exchange of the battery apparatus 1100. The heat exchange medium may heat the battery cell 20 or cool the battery cell 20. The specific design may be based on actual needs. The heat exchange medium may be, but is not limited to, water, air, refrigerant, or the like. The heat exchange plate 30 includes two plates, at least one of the plates has a surface recess that docks with the other plate, thereby forming the flow channel 31. A protrusion formed by recessing of the flow channel 31 on the surface of the heat exchange plate 30 is a surface protrusion 32. The battery cell 20 is arranged on an inner side of the box main body 200, the heat exchange plate 30 is sealed at an opening of the box main body 200, and the guard plate 100 is installed on a side of the heat exchange plate 30 facing away from the battery cell 20 to protect the battery cell 20 and the heat exchange plate 30. A second fastener 420 passes through a peripheral edge of the guard plate 100 and a peripheral edge of the heat exchange plate 30 and is connected to a box main body 200, and a sealing member 500 is further clamped between the peripheral edge of the guard plate 100 and the peripheral edge of the heat exchange plate 30 to achieve sealing of the box body 10. The second fastener 420 may be but not limited to a screw, a bolt, or the like. The sealing member 500 may be but not limited to a sealant, a sealing ring, or the like. The guard plate 100 may be located at the top of the battery apparatus 1100 or located at the bottom of the battery apparatus 1100.

Finally, it should be noted that, the above embodiments are merely used for describing the technical solution of the present application, instead of limiting the present application. Although the present application is described in detail with reference to the foregoing embodiments, those of ordinary skill in the art should understand that they can still make modifications on the technical solution recorded in the above embodiments, or perform equivalent replacements on all or a part of technical features thereof; these modifications or replacements are not intended to make the essences of the corresponding technical solutions depart from the scope of the technical solutions of the embodiments of the present application, and should be all included in the scope of the claims and description of the present application. In particular, the technical features mentioned in the various embodiments can be combined in any manner as long as there is no structural conflict. The present application is not limited to the particular Examples disclosed herein, but rather includes all technical solutions falling within the scope of the claims.

## Claims

1. A battery apparatus, comprising:
a box body;
a battery cell, the battery cell being arranged in the box body; and
a guard plate, wherein in a direction of gravity, the guard plate is arranged at the bottom of the battery cell, and the guard plate comprises a first fiber resin layer, an intermediate layer, and a second fiber resin layer stacked in sequence in a first direction, the intermediate layer comprises a resin frame portion and an anti-puncture plate portion, the anti-puncture plate portion is located in the resin frame portion, and the resin frame portion is connected between the first fiber resin layer and the second fiber resin layer.

2. The battery apparatus according to claim 1, wherein the anti-puncture plate portion comprises a plurality of sub-plate portions arranged at intervals, the resin frame portion is provided with a partition bar, and the partition bar is arranged between two adjacent sub-plate portions.

3. The battery apparatus according to any one of claims 1 to 2, wherein the anti-puncture plate portion is of a flat plate structure.

4. The battery apparatus according to any one of claims 1 to 3, wherein the guard plate is of a flat plate structure.

5. The battery apparatus according to any one of claims 1 to 4, wherein the width of the guard plate is W, and in a width direction of the guard plate, the size of the anti-puncture plate portion is w, and 0.6≤w/W<1.

6. The battery apparatus according to any one of claims 1 to 5, wherein the length of the guard plate is L, and in a length direction of the guard plate, the size of the anti-puncture plate portion is l, and 0.6≤l/L<1.

7. The battery apparatus according to any one of claims 1 to 6, wherein the plate thickness of the resin frame portion is equal to the plate thickness of the anti-puncture plate portion.

8. The battery apparatus according to any one of claims 1 to 7, wherein the layer thickness of the second fiber resin layer is greater than the layer thickness of the first fiber resin layer.

9. The battery apparatus according to any one of claims 1 to 8, wherein the layer thickness of the first fiber resin layer is h1, and 0<h1≤1.2 mm.

10. The battery apparatus according to any one of claims 1 to 9, wherein the layer thickness of the second fiber resin layer is h2, and 0<h2≤1.2 mm.

11. The battery apparatus according to any one of claims 1 to 10, wherein the plate thickness of the anti-puncture plate portion is h3, and 0<h3≤1 mm.

12. The battery apparatus according to any one of claims 1 to 11, wherein the guard plate further comprises an adhesive layer, and the first fiber resin layer and the intermediate layer are bonded to each other through the adhesive layer; and/or the second fiber resin layer and the intermediate layer are bonded to each other through the adhesive layer.

13. The battery apparatus according to claim 12, wherein the adhesive layer comprises a resin film layer.

14. The battery apparatus according to claim 12, wherein the layer thickness of the adhesive layer is h4, and 0<h4≤0.5 mm.

15. The battery apparatus according to any one of claims 1 to 14, wherein a region of the guard plate corresponding to the anti-puncture plate portion is recessed in the first direction to form an accommodating cavity, a cavity bottom surface of the accommodating cavity is convex in a direction opposite to the first direction to form a countersunk platform, and the countersunk platform encloses to form a counterbore for a first fastener to pass through.

16. The battery apparatus according to claim 15, wherein the protruding height of the countersunk platform is H, and 0 mm<H≤10 mm.

17. The battery apparatus according to any one of claims 1 to 16, wherein the first fiber resin layer comprises a plurality of layers of first fiber reinforced prepregs stacked one on another; and the second fiber resin layer comprises a plurality of layers of second fiber reinforced prepregs stacked one on another.

18. The battery apparatus according to any one of claims 1 to 17, wherein the anti-puncture plate portion is a steel plate, and an outer surface of the steel plate is provided with a galvanized layer, a galvanized iron alloy layer, or an electrophoretic paint protective layer.

19. The battery apparatus according to any one of claims 1 to 18, wherein the first fiber resin layer and the second fiber resin layer are independently selected from glass fiber reinforced polyamide resin parts, glass fiber reinforced polypropylene resin parts, glass fiber reinforced polyethylene resin parts, glass fiber reinforced polycarbonate resin parts or glass fiber reinforced polystyrene resin parts.

20. An electrical apparatus, comprising the battery apparatus according to any of claims 1 to 19, wherein the battery apparatus is configured to provide electric energy.
